(19) Europäisches Patentamt
European Patent Office
Office européen des brevets

(11) **EP 1 548 179 B2**

(12) **NEW EUROPEAN PATENT SPECIFICATION**
After opposition procedure

(45) Date of publication and mention
of the opposition decision:
**17.04.2013 Bulletin 2013/16**

(45) Mention of the grant of the patent:
**03.03.2010 Bulletin 2010/09**

(21) Application number: **03794161.4**

(22) Date of filing: **01.09.2003**

(51) Int Cl.:
*D06M 15/263* (2006.01)     *D06M 14/10* (2006.01)
*D06M 13/203* (2006.01)     *D06C 11/00* (2006.01)
*C08F 20/06* (2006.01)      *C08F 2/00* (2006.01)
*D06M 15/27* (2006.01)      *D06M 14/02* (2006.01)
*D06M 14/20* (2006.01)      *D06M 14/26* (2006.01)
*D06M 14/22* (2006.01)      *D06M 17/04* (2006.01)
*B32B 5/26* (2006.01)       *C08F 2/10* (2006.01)
*C08F 20/04* (2006.01)

(86) International application number:
**PCT/JP2003/011149**

(87) International publication number:
**WO 2004/022840 (18.03.2004 Gazette 2004/12)**

(54) **METHOD FOR PRODUCING WATER-ABSORBING COMPOSITE**

VERFAHREN ZUR HERSTELLUNG EINES WASSERABSORBIERENDEN VERBUNDS

PROCEDE DE PRODUCTION D'UN COMPOSITE ABSORBANT L'EAU

(84) Designated Contracting States:
**BE DE**

(30) Priority: **04.09.2002 JP 2002258413**
**02.10.2002 JP 2002290358**
**04.06.2003 JP 2003159488**

(43) Date of publication of application:
**29.06.2005 Bulletin 2005/26**

(73) Proprietor: **DAIO PAPER CORPORATION**
**Iyomishima-shi,**
**Ehime 799-0492 (JP)**

(72) Inventors:
• **NOMURA, Kouji,**
**c/o TOAGOSEI CO, LTD.**
**Nagoya-shi, Aichi 455-0026 (JP)**
• **MIHO, Susumu,**
**c/o TOAGOSEI Co., Ltd.**
**Nagoya-shi,**
**Aichi 455-0026 (JP)**
• **YAMAMOTO, Koushi,**
**c/o TOAGOSEI CO, LTD.**
**Nagoya-shi, Aichi 455-0026 (JP)**

(74) Representative: **Ziebig, Marlene et al**
**Gulde Hengelhaupt Ziebig & Schneider**
**Patentanwälte Rechtsanwälte**
**Wallstrasse 58/59**
**10179 Berlin (DE)**

(56) References cited:
EP-A- 0 251 314      EP-A- 0 290 814
EP-A1- 0 396 920     EP-A1- 0 777 000
WO-A1-95/30396       JP-A- 2001 212 899
JP-A- 2001 214 399   US-A- 5 143 779
US-B1- 6 417 425

• WENSKE, G.: 'Wörterbuch Chemie, Deutsch/ Englisch', 1993, VCH, WEINHEIM page 130
• 'Stichwort "Titer (Textil)"' WIKIPEDIA pages 1 - 3

**Description**

TECHNICAL FIELD

This invention relates to a process for a water-absorbing composite. It also relates to a process for manufacturing a laminated water-absorbing composite comprising gluing a water-absorbing composite and a fibrous substrate. A water-absorbing composite and a laminated water-absorbing composite prepared in accordance with the present manufacturing process have good characteristic that they can exhibit a higher water-absorbing rate and an increased water absorption. Thus, they are useful as starting materials for manufacturing products such as paper diapers and sanitary napkins.

BACKGROUND ART

A conventional water-absorbing sheet used for a paper diaper or sanitary napkin has been prepared by homogeneously dispersing water-absorbing resin particles such as crosslinked polyacrylic acid in a fibrous substrate such as a paper, a pulp and an unwoven fabric and then fixing the resin particles to the fibrous substrate. However, in the water-absorbing sheet, few water-absorbing resin particles are firmly fixed to the fibrous substrate, so that the resin particles are easily detached from the fibrous substrate. Furthermore, handling a solid powder makes a preparation process for the sheet more complicated.

To solve the above described problem, there has been suggested a process for manufacturing a water-absorbing sheet comprising spraying an aqueous monomer solution containing acrylic acid and an acrylate to a fibrous substrate and then irradiating the substrate with ionizing radiation or fine-particle ionizing radiation. In the process, for example, ionizing radiation can be irradiated to initiate polymerization of the sprayed monomer for fixing a water-absorbing resin to the fibrous substrate. A product consisting of a water-absorbing resin and a fibrous substrate thus formed is sometimes referred to as a "water-absorbing composite". Thus, the term "water-absorbing composite" is herein used in a similar sense.

Japanese Patent Application No. 1989-292103A (pp. 1 to 3) has disclosed a process for manufacturing a water-absorbing composite as described above comprising irradiating an aqueous monomer solution carried on a fibrous substrate with ultraviolet rays (UV) to polymerize monomer(s). The specification has described that it is preferable to irradiate an aqueous monomer solution with UV for polymerizing most of the monomers followed by irradiation of electron beam for eliminating unreacted monomers and then irradiation of UV for improving a polymerization conversion rate. As described above, even when employing UV polymerization, a complex manufacturing process is required for producing a water-absorbing composite free from unreacted monomers.

Japanese Patent Application No. 2000-328456A (Claim 1) has described that an aqueous monomer solution in which a redox polymerization is proceeding is added dropwise to a fibrous substrate for completing the polymerization reaction on the fibrous substrate. It has described that the process can be employed to produce a water-absorbing composite with improved water-absorbing and water-holding capacity.

Japanese Patent Application No. 1997-67403A (Claims) has described that a void percentage of a fibrous substrate constituting a water-absorbing composite is preferably 50 to 99.5 %; that a primary particle size of a water-absorbing resin particle carried on a substrate is preferably 50 to 1000 $\mu$m; and that the amount of the adhering water-absorbing resin per $1m^2$ of the substrate is preferably 10 to 500 g.

In the processes described in the above three specifications, an aqueous monomer solution is polymerized on a fibrous substrate, so that resulting water-absorbing resin particles are integrated with the fiber. The processes can solve many problems in employing dispersion of a powdery water-absorbing resin into a fibrous substrate.

The water-absorbing composites described in these specifications exhibit an inadequate water-absorbing rate. In particular, a water-absorbing composite with a higher water-absorbing rate is needed for application to sanitary goods such as diapers.

To solve these problems, Japanese Patent No. 2554136A (Claim 1) has suggested that a fiber web in which a fiber density of a fibrous substrate is alternately varied such that a striped pattern is formed along the plane direction of the fibrous substrate is used as a fibrous substrate.

According to the invention, when applying a monomer on the fiber web, monomer droplets may be combined on the fiber web before polymerization, or may permeate into the fiber. As a result, a water-absorbing composite produced by monomer polymerization has an uneven water-absorbing resin distribution and tends to have insufficient softness.

DISCLOSURE OF THE INVENTION

We have conducted intensive investigation for solving the above problems and have envisaged using a heat-raised fibrous substrate to which an aqueous monomer solution is applied as a mist, then polymerizing the fine droplets of the aqueous monomer solution applied. Thus, mutually independent, substantially sphere fine water-absorbing resin particles could be attached to each fiber constituting the fibrous substrate like a row of beads. We have found that in the water-absorbing composite thus produced, a water absorption is increased in proportion to the amount of the carried water-absorbing resin.

We have also found that when an unwoven fabric to which the water-absorbing resin particles are attached has a tensile strength within a certain range lower than that of a conventionally used unwoven fabric, a water-absorbing composite produced using the unwoven fabric can exhibit a significantly higher water absorption. When a water-absorbing composite produced using an unwoven fabric with a lower tensile strength absorbs water, the water-absorbing resin particles are significantly swollen while the unwoven fabric is easily deformed because of its lower tensile strength. Thus, swelling of the water-absorbing resin particles is not inhibited. We have, therefore, considered that a water-absorbing composite produced using an unwoven fabric with a lower tensile strength may have a considerably increased water absorption.

Based on the above findings, we have achieved a first aspect of the present invention.

The first aspect of the invention is a process for manufacturing a water-absorbing composite comprising the steps of:

(A0) raising a fibrous substrate by heating at a temperature of 70-150°C;
(A) spraying an aqueous monomer solution containing acrylic acid and/or its salt on the heat-raised fibrous substrate to apply droplets of the aqueous monomer solution on the fiber constituting the fibrous substrate;
(B) polymerizing the monomers in the droplets to form a water-absorbing composite in which the water-absorbing resin particles adhere to the fiber constituting the fibrous substrate, wherein the fibrous substrate is a unwoven fabric whose base fiber has a fineness of 2.0 to 20 dtex and a fiber length of 32 to 128 mm.

We have further found that the water-absorbing composite described above can be thermo-compressed to significantly improve a diffusion rate of water and retention of absorbed water (release-preventing property), achieving a second aspect of this invention.

The second aspect of this invention is a process for manufacturing a water-absorbing composite comprising the steps of:

(A0) raising a fibrous substrate by heating at a temperature of 70-150°C;
(A) spraying an aqueous monomer solution containing acrylic acid and/or its salt on the heat-raised fibrous substrate to apply droplets of the aqueous monomer solution on the fiber constituting the fibrous substrate;
(B) polymerizing the monomers in the droplets to form a water-absorbing composite in which the water-absorbing resin particles adhere to the fiber constituting the fibrous substrate; and
(C) thermo-compressing the water-absorbing composite prepared in step (B), wherein the fibrous substrate is a unwoven fabric whose base fiber has a fireness of 2.0 to 20 dtex and a fiber length of 32 to 128 mm.

We have further found that in a laminated water-absorbing composite prepared by integrating the above water-absorbing composite and the fibrous substrate by thermal fusion, the water-absorbing resin particles can efficiently exert its water-absorbing capacity to rapidly absorb a large amount of water. We have also found that an uneven pattern can be formed in the surface of the laminated water-absorbing composite by thermal compression to endow the composite with a further improved water-absorbing ability without deteriorating its softness. From these findings, we have achieved a third aspect of the present invention.

The third aspect of the present invention is a process for manufacturing a laminated water-absorbing composite comprising the steps of:

(A0) raising a fibrous substrate by heating at a temperature of 70-150°C;
(A) spraying an aqueous monomer solution containing acrylic acid and/or its salt on the heat-raised fibrous substrate to apply droplets of the aqueous monomer solution on the fiber constituting the fibrous substrate;
(B) polymerizing the monomers in the droplets to form a water-absorbing composite in which the water-absorbing resin particles adhere to the fiber constituting the fibrous substrate; and
(D) laminating the water-absorbing composite prepared in step (B) and a fibrous substrate to form a laminate and then passing the laminate between a pair of rollers, at least one of which is heated, for thermally compressing the laminate to integrate the water-absorbing composite and the fibrous substrate by thermal fusion, wherein the fibrous substrate is a unwoven fabric whose base fiber has a fireness of 2.0 to 20 dtex and a fiber length of 32 to 128 mm.

In the first, aspect of this invention for a manufacturing process for a water-absorbing composite, a fibrous substrate is preheated for raising so that water-absorbing resin particles can be firmly and independently attached to each fiber constituting the fibrous substrate, so-called in a row of beads. The water-absorbing composite thus prepared has a higher water-absorbing rate, an increased water absorption and improved softness because absorptive resin particles are independently and homogeneously dispersed within the composite. Thus, a water-absorbing composite produced according to the first aspect is suitable to a sanitary material such as a paper diaper.

Furthermore, when using an unwoven fabric as a fibrous substrate with a tensile strength of 50 to 300 g/25 mm as determined under the measuring conditions described below, swelling of the water-absorbing resin particles are not inhibited that a water-absorbing composite exhibiting a larger water absorption can be provided.

In the second aspect of the present invention, the water-absorbing composite is further thermally compressed, so that a water absorption, a water-absorbing rate and a permeation rate of the resulting water-absorbing composite can be significantly improved. During the thermal compression, an uneven pattern can be formed in the surface of the water-absorbing composite to be further improved a water-absorbing rate and a water absorption.

In the third aspect of the present invention for a process for manufacturing a laminated water-absorbing composite, the water-absorbing composite and the fibrous substrate can be laminated to form an integrated laminate composite, for realizing efficient water-absorption and rapid absorption of a large amount of water. Furthermore, an uneven pattern can be formed in the surface of the laminated water-absorbing composite by thermal compression to realize a further improved absorbing ability without deterioration of softness.

## BRIEF DESCRIPTION OF THE DRAWINGS

FIG. 1 shows a configuration of an exemplary manufacturing apparatus used for a continuous manufacturing process for a water-absorbing composite of the present invention.

FIG. 2(A) is an electron micrograph of a water-absorbing composites prepared in Example 1.

FIG. 2(B) is an electron micrograph of a water-absorbing composites prepared in Comparative Example 1.

FIG. 3 shows schematic configurations of an incontinence liner. FIG. 3(a) is showing when using water-absorbing composites of Example 7, FIG. 3(b) is showing that of Example 8, and FIG. 3(c) is showing that of Reference Example 1.

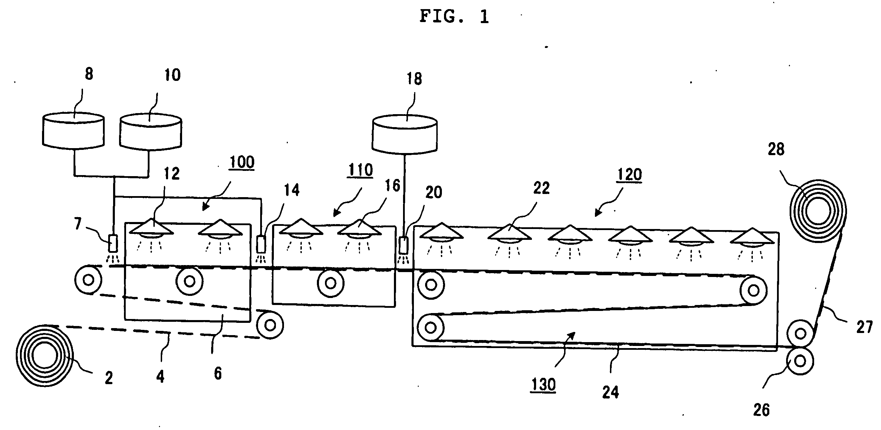

In FIG. 1, the symbols have the following meanings; 2: a fibrous substrate roll, 4: a fibrous substrate, 6: a raising unit, 7 and 14: spray nozzles, 8: a monomer aqueous solution tank, 10: an additive tank, 12, 16 and 22: UV lamps, 18: a finishing agent tank, 20: a spray nozzle for applying a finishing agent, 24: a water-absorbing composite, 26: a thermal compression roller, 27: a thermally-compressed water-absorbing composite, 28: a product of water-absorbing composite roll, 100: a first polymerization unit, 110: a second polymerization unit, 120: a third polymerization unit, 130: a heat-retention unit, 52: an unwoven fabric, 54: a water-absorbing composite, 56: a toilet paper, 58: an unwoven fabric, and 60: a polyethylene sheet.

## BEST MODE FOR CARRYING OUT THE INVENTION

### First aspect of the invention

### Step (A)

In a manufacturing process of the present invention, a fibrous substrate used as a starting material is an unwoven fabric in the light of easy raising by heating. An unwoven fabric is generally prepared by thermally fusing base fibers via a binder fiber.

An unwoven fabric used in the present invention is prepared using a base fiber with a fineness (fiber diameter) of 2.0 to 20 dtex and a fiber length of 32 to 128 mm. When the base fiber has a fineness of less than 2.0 dtex, a resulting unwoven fabric tends to exhibit insufficient air permeability. When the base fiber has a fineness of more than 20 dtex, the amount of an adhering water-absorbing resin cannot be increased. When the base fiber has a fiber length of less than 32 mm, raising of an unwoven fabric by heating tends to be insufficient and an amount of an adhering water-absorbing resin in a water-absorbing composite tend to be insufficient. When the base fiber has a fiber length of more than 128 mm, carding during manufacturing an unwoven fabric is to be difficult.

An area weight of an unwoven fabric is preferably 10 to 100 $g/m^2$. A bulkiness of an unwoven fabric is preferably $0.1 \times 10^2$ to $2.0 \times 10^2$ ml/g as a specific volume, i. e., a volume per 1 g of the unwoven fabric.

The term "unwoven fabric" as used herein collectively refers to a loose pad of a carded or aerated web or fiber in addition to an unwoven fabric in a narrow sense, i. e., a fiber web where base fibers are fixed via a binder fiber.

An unwoven fabric comprising a small amount of a hydrophilic fiber such as rayon, cotton and regenerated cellulose fibers is also preferable.

A material for a base fiber is preferably a hydrophobic resin because an aqueous monomer solution adheres to a fiber as fine droplets when being applied on a substrate surface as a mist. Specific examples include known fibers such as polyethylene, polypropylene, ethylene-propylene copolymers, polyethylene terephthalate, polyamides, polystyrene, polyacrylonitrile, polyvinyl chloride and polyvinylidene chloride.

An unwoven fabric comprising such a fiber made of a hydrophobic resin as a base fiber is preferable in the light of allowing an aqueous monomer solution (to be water-absorbing resin particles after polymerization) to adhere to the base fiber as fine droplets. However, unless a base fiber itself has some degree of hydrophilicity, liquid leak tends to occur when using a product such as a paper diaper and sanitary goods comprising a water-absorbing composite manufactured from such a base fiber. An unwoven fabric used in the present invention is, therefore, preferably hydrophilized one.

Hydrophilization is preferably effected by coating an unwoven fabric with a nonionic surfactant such as polyoxyethylene alkyl ethers, polyoxyethylene phenol ethers, polyoxyethylene sorbitan esters, polyoxyethylenealkyl aliphatic acid esters and polyoxyethylene-oxypropylene block polymers, or a known anionic surfactant such as higher fatty acid salts, alkylnaphthalenesulfonates, dialkylsuccinates and alkylsulfate salts.

Hydrophilization may be specifically effected, for example, by adding the surfactant (a hydrophilizing agent) in a spinning solution when spinning a base fiber and conducting spinning using the mixture, or alternatively by spraying a solution of a hydrophilizing agent in a solvent on a fiber after spinning.

An unwoven fabric is generally released as a roll, whose tensile strength is generally different between a transverse direction (cross direction) and a warp direction (longitudinal direction). In the present invention, a longitudinal tensile strength is preferably within the range below, where a tensile strength of an unwoven fabric in this invention is as determined by the method below in accordance with JIS-P8113.

Specifically, a tensile strength is measured under the conditions; a width of a test piece: 25 mm, its length: 150 mm, a distance between two clamps: 100 mm and an extension rate: 100 mm/min. In the present invention, is preferred an unwoven fabric with a tensile strength (in a longitudinal direction of the unwoven fabric) under the measuring conditions of 50 to 300 g/25 mm, more preferably 70 to 250 g/25 mm, particularly preferably 80 to 200 g/25 mm. A commonly used unwoven fabric has a transverse tensile strength of 20 to 600 g/25 mm. In the present invention, an unwoven fabric preferably has a transverse tensile strength of 20 to 200 g/25 mm.

A longitudinal tensile strength of less than 50 g/25 mm may be too weak to properly handle the fabric and may lead to a water-absorbing composite with insufficient shape stability during water absorption. When a tensile strength is more than 300 g/25 mm, swelling during absorption tends to be inhibited, resulting in a reduced water absorption by a water-absorbing composite.

A tensile strength of an unwoven fabric can be adjusted as described below by appropriately selecting materials for a base fiber and a binder fiber constituting the unwoven fabric, their fineness, their fiber length, a blending rate of the binder fiber and the heating conditions (a temperature and a period) for partially fusing the binder fiber.

An appropriate thickness of an unwoven fabric is generally, but not limited to, about 0.5 to 1.5 mm (in the state before raising as described below).

In the present invention, the above fibrous substrate is raised by heating. A heating temperature is around a softening point of a base fiber constituting a fibrous substrate; it is selected within a range of 70 to 150 °C. An appropriate heating period is, depending on a heating temperature, generally several seconds to 180 sec. Further preferable heating conditions are 90 to 120 °C and 1 to 30 sec. Heating may be conducted by, but not limited to, passing a fibrous substrate through a heating furnace in a predetermined time, blowing a fibrous substrate with a hot air, or heating with an infrared ray lamp.

By heating according to any of the above methods, some fibers constituting the fibrous substrate is raised on the substrate surface. As a result, a volume of the fibrous substrate becomes generally increases 1.3- to 3.0-fold in comparison with that before raising. A degree of raising generally depends on a length of a base fiber contained in the fibrous substrate. It is preferable to increase a volume of the fibrous substrate to 1.5- to 3.0-fold compared to that before raising, by appropriately selecting a length of the base fiber and heating conditions in the raising process.

Besides heating, alternative means such as a roller with many pins are known for raising an unwoven fabric or fiber web. However, a fibrous substrate raised by a mechanical methods other than heating cannot allow large amount of an aqueous monomer solution as fine droplets to adhere to a base fiber. As a result, a resulting water-absorbing composite has a lower water absorption and a lower water-absorbing rate.

In the present invention, to a raised fibrous substrate is applied by spraying as a mist an aqueous monomer solution containing acrylic acid and/or its salt (hereinafter, collectively referred to as an "acrylic monomer") as a main component.

A preferable monomer is a mixture of acrylic acid and an acrylate in which 20 to 90 mol% of acrylic acid has been converted into an alkali-metal salt or ammonium salt. A monomer other than an acrylic monomer (an additional monomer) may be combined; for example, methacrylic acid and its derivatives, (meth)acrylamide, 2-hydroxyethyl (meth)acrylate and 2-acrylamide-2-methylpropanesulfonic acid or its salts. The amount of the additional monomer is preferably 20 mol% or less to the total amount of the acrylic monomer and the additional monomer.

A monomer concentration in the aqueous monomer solution is preferably 20 to 80 wt%. As a monomer concentration is higher, the water-absorbing resin particles adhering to the fibrous substrate surface is increased and a thermal energy for drying wet water-absorbing resin particles prepared by polymerizing the monomer can be more reduced. It is, therefore, preferable to use an aqueous monomer solution with a concentration as high as possible. Generally, a monomer concentration is around a saturated solubility of the monomer.

In addition to a monomer, the aqueous monomer solution can contain other additives such as a crosslinking agent and a polymerization initiator.

Examples of a crosslinking agent include ethyleneglycol di(meth)acrylate, diethyleneglycol di(meth)acrylate, polyethyleneglycol di(meth)acrylate, propyleneglycol di(meth)acrylate, polypropyleneglycol di(meth)acrylate, glycerin tri(meth)acrylate, N,N'-methylenebisacrylamide, diaryl phthalates, triaryl cyanulates, triaryl isocyanulates and triaryl phosphates.

The amount of a crosslinking agent is preferably 100 to 10,000 ppm, particularly preferably 1000 to 5000 ppm to the total amount of monomers.

The amount of a photoinitiator used when conducting polymerization by UV irradiation is preferably 10 to 1000 ppm to the total amount of monomers. If the amount of a photoinitiator is less than 10 ppm, polymerization is insufficient, while if it is more than 1000 ppm, a polymerization degree of water-absorbing resin particles is reduced.

Step (B)

Monomers may be polymerized by a common radical polymerization. The polymerization can be initiated by thermal polymerization using a thermally decomposing radical initiator or by irradiation with an active energy beam such as ultraviolet rays and electron beam. A preferable polymerization method is a thermal polymerization or a UV irradiation method in the presence of a photoinitiator (hereinafter, referred to as "UV irradiation polymerization"), particularly preferably UV irradiation polymerization.

Photoinitiators used when employing UV irradiation polymerization include azo compounds such as 2,2'-azobis (2-aminodipropane) salts; ketones such as 1-benzoyl-1-hydroxycyclohexane and benzophenone; benzoin and its alkyl ethers; benzyl ketals; and anthraquinone derivatives.

Preferred are benzoyl compounds such as 1-hydroxy-cyclohexyl-phenyl-ketone and azo compounds such as 2,2'-azobis{2-(2-imidazolin-2-yl)propane}. The amount of the photoinitiator is as described above.

It is preferable to use a thermally decomposing radical initiator in combination with the above photoinitiator. Examples of a thermally decomposing radical initiator include water-soluble radical initiators such as hydrogen peroxide, ammonium persulfate, potassium persulfate, t-butyl hydroperoxide and cumene hydroperoxide. The compound may be used as a redox initiator by being further combined with a reductive compound such as sodium hydrogen sulfite, sodium thiosulfate, L-ascorbic acid and amines.

By combining the thermally decomposing radical initiator, thermal polymerization occurs concurrently with UV polymerization. As a result, a polymerization conversion rate is increased and the amount of residual unreacted monomers is reduced in the resulting water-absorbing resin particles. The amount of the thermally decomposing radical initiator is preferably 100 to 5000 ppm, particularly preferably 500 to 2000 ppm to the total amount of monomers.

Monomer polymerization is preferably at 50 to 80 °C. Thus, a thermally decomposing radical initiator is a compound which is decomposed at 80 °C or lower to generate radicals; for example, persulfates such as ammonium persulfate and sodium persulfate.

An aqueous monomer solution may, as necessary, contain a chain transfer agent or a surfactant.

The aqueous monomer solution is applied (sprayed) as a mist on a raised fibrous substrate. The aqueous monomer solution may be atomized by employing a known liquid atomizing method; for example, a dropping method, a liquid dropping method using a spray nozzle, a liquid dropping method using a turntable type atomizer and an ultrasonic method.

An average size of droplets applied on a fibrous substrate is preferably 50 to 500 $\mu$m. When an average size is less than 50 $\mu$m, droplets sprayed on the fibrous substrate do not adhere to the fibrous substrate, but tends to pass through the fibrous substrate to its rear side. When an average size of droplets is more than 500 $\mu$m, droplets tends to be unevenly attached to the fibrous substrate. As a result, a resulting water-absorbing composite may not have a sufficient water absorption or water-absorbing rate.

The droplets of an aqueous monomer solution with a size of 50 to 500 $\mu$m become water-absorbing resin particles with a size of about 30 to 300 $\mu$m adhering to the fibrous substrate like a row of beads after polymerization and drying.

The amount of an aqueous monomer solution applied to a fibrous substrate is such that the amount of dry water-absorbing resin particles attached after polymerizing the aqueous monomer solution to the fibrous substrate is 100 g/m$^2$ or more, further preferably 200 g/m$^2$ or more. When the amount of water-absorbing resin particles attached to the fibrous substrate is 100 g/m$^2$ or less, a water-absorbing composite tends to have an insufficient water absorption or water-absorbing rate. Application of the aqueous monomer solution may be divided into multiple times. For example, first the aqueous monomer solution may be sprayed on a fibrous substrate. Then, after irradiating the substrate with UV rays for about 10 to 60 sec, the monomer solution may be again applied to the fibrous substrate and UV irradiation may be further repeated.

In polymerization, it is preferable to eliminate oxygen as much as possible to maintain the polymerization system under an inert gas atmosphere such as nitrogen gas.

A lamp used for UV polymerization is preferably selected from a high-pressure mercury lamp or metal halide lamp capable of emitting UV rays with a wavelength of 250 to 450 nm. A mercury lamp output is preferably 30 to 240 W/cm. A UV dose is preferably 100 to 10000 mj/cm$^2$, more preferably 2000 to 6000 mj/cm$^2$. When a UV dose of the lamp is insufficient, a required UV dose may be obtained using a plurality of mercury lamps.

By the above UV polymerization, most (about 90 % or more) of the monomers are polymerized in about 5 to 60 sec. A temperature of the fine droplets of the aqueous monomer solution carried on the fibrous substrate seems to be about 80 to 90 °C.

The polymerization reaction provides wet-gel water-absorbing resin particles comprising water in about 15 to 50 wt% and unreacted monomers in 0.1 to 10 wt%.

It is preferable to further continue heating for an appropriate period to reduce unreacted monomers.

Immediately after forming wet gel particles, it is desirable to spray an aqueous solution of a crosslinking agent having, for example, a plurality of epoxy groups reactive to carboxyl (hereinafter, referred to as a "surface finishing agent") to the wet gel particles for further improving a crosslinking degree of the surface layer.

Examples of a surface finishing agent include glycidyl ethers such as ethyleneglycol diglycidyl ether and polyethyleneglycol diglycidyl ether; polyols such as diethyleneglycol, triethyleneglycol, propyleneglycol, glycelol, and pentaerythritol; and polyamines such as ethylenediamine. The amount of the surface finishing agent is preferably 100 to 1000 ppm to that of the water-absorbing resin particles.

The wet gel particles thus obtained can be dried to provide a desired water-absorbing composite where the water-absorbing resin particles are fixed on the fibrous substrate.

Second aspect of the invention

The water-absorbing composite produced in the first aspect of this invention can be used as is for the various applications described above. However, in order to further improve a water-absorbing ability including a water-absorbing rate, a water absorption, liquid diffusivity and liquid backflow prevention, it is preferable to further heat and compress the water-absorbing composite obtained from steps (A) and (B) of the first aspect in step (C).

Step (C)

Thermal compression of the water-absorbing composite is preferably effected using, for example, a hot press, a hot roller or an embossed roller.

A thermal compression temperature is preferably 50 to 150 °C, more preferably 70 to 120 °C. When a thermal compression temperature is lower than 50 °C, compression is insufficiently effective. When a thermal compression temperature is higher than 150 °C, the fibrous substrate may be thermally melted, leading to an undesirable result of deteriorated softness.

A thermal compression pressure is preferably 0.01 to 100 MPa, more preferably 0.1 to 10 MPa.

A thermal compression time is preferably 1 to 100 sec, depending on a temperature and a pressure.

When a water-absorbing composite is thermally compressed in an industrial scale, it is particularly preferable to use a hot roller. Specifically, while pressing a pair of hot rollers to a linear load of 10 to 100 kg/cm, the above water-absorbing composite is continuously fed between the rollers to be thermally compressed between the rollers.

A gap between a pair of rollers used for thermal compression is preferably 10 to 500 μm, depending on a thickness of a water-absorbing composite to be thermally compressed. When it is less than 10 μm, a fibrous substrate may be cut, while if it is more than 500 μm, compression is insufficiently effective.

By the above thermal compression, the water-absorbing composite becomes a water-absorbing composite with a reduced thickness to 10 to 90 %.

In the pair of rollers, at least one roller preferably has an uneven pattern. A depth of the uneven pattern is 0.001 mm or more, preferably 0.01 to 1 mm.

Examples of the uneven pattern include a pattern where a linear irregularity is repeated with an interval of 10 mm or less (a stripe pattern) and a pattern where a corrugate such as a polygon, a circle or an ellipse included within a 10 mm-diameter circle is two-dimensionally repeated with an interval of 10 mm or less. In a stripe pattern, a further preferable interval between patterns is 0.05 to 5 mm. In a pattern formed by repeated polygons or circles, a further preferable interval between patterns is 1 to 5 mm. For a pattern where an interval between patterns is more than 10 mm or a pattern extending beyond a 10 mm circle, effects of the present invention obtained by compressing a water-absorbing composite may not be adequately achieved.

By the above thermal compression, the water-absorbing composite can be thermally compressed to further improve a water-absorbing rate, an amount of water absorption, liquid diffusivity and liquid backflow prevention.

There will be described an exemplary continuous manufacturing process for a water-absorbing composite incorporating the first and the second aspects of the invention with reference to FIG. 1.

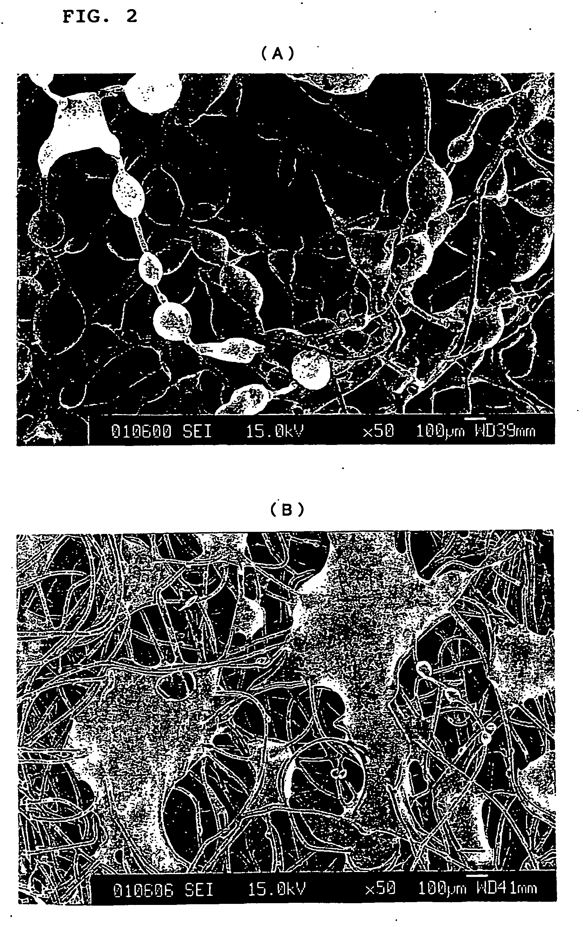

In FIG. 1, 2 denotes a fibrous substrate roll consisting of a wound unwoven fabric. A fibrous substrate 4 reeled out from the roll 2 is fed to a raising unit 6, where it is then raised by heating. The raising process is as described above. The raising conditions may be adjusted to increase bulkiness of the fibrous substrate so that a volume per 1 g of the fibrous substrate (specific volume) can be 1.3-fold or more, preferably 1.5- to 2.5-fold of that before raising the fibrous substrate.

Then, the above heating is effected to continuously apply an aqueous monomer solution containing a crosslinking agent and a polymerization initiator to the raised fibrous substrate 4. Application of the aqueous monomer solution is conducted by spraying the aqueous monomer solution using a spray nozzle 7. In FIG. 1, 8 denotes a monomer aqueous solution tank for an aqueous solution containing monomers, a crosslinking agent and so forth; 10 denotes an additive tank for an aqueous solution of additives such as a polymerization initiator. The aqueous solution containing monomers and a crosslinking agent and the aqueous solution of additives such as a polymerization initiator in the tanks 8, 10 are blended and the mixture is then fed to the spray nozzle 7.

In this embodiment, a polymerization initiator is a combination of a photoinitiator and a thermal polymerization initiator.

The fibrous substrate 4 to which the aqueous monomer solution has been applied as described above is fed to a first polymerization unit 100, in which a plurality of UV lamps 12 are placed in the upper part. The fibrous substrate 4 is then irradiated with UV rays from above. By the UV irradiation, the monomers carried on the fibrous substrate 4 is polymerized. The inside of the first polymerization unit 100 is maintained under an atmosphere of an inert gas such as nitrogen gas, to eliminate oxygen as much as possible. A UV lamp 12 is preferably a mercury lamp or metal halide lamp.

Then, to the fibrous substrate 4 passing through the first polymerization unit 100 is again applied the above aqueous monomer solution from a spray nozzle 14, to allow the fibrous substrate 4 to carry a sufficient amount of the monomers.

The fibrous substrate 4 with the aqueous monomer solution is fed to a second polymerization unit 110. The inside of the second polymerization unit 110 is maintained under an inert atmosphere as is in the first polymerization unit 100. There are a plurality of UV lamps 16 in the upper part of the second polymerization unit 110. By UV rays emitted from the UV lamps, the applied monomers are again polymerized.

Next to the second polymerization unit 110, there is placed a spray nozzle for coating with a surface finishing agent 20 for spraying a finishing agent stocked in a surface finishing agent tank 18. By the spray nozzle 20, the fibrous substrate 4 passing through the second polymerization unit 110 is coated with the surface finishing agent.

Next to the spray nozzle for coating with a surface finishing agent 20, there is a third polymerization unit 120. The inside of the third polymerization unit 120 is maintained under an inert gas atmosphere as is in the second processing unit 110. In the upper part of the third polymerization unit 120, there are placed a plurality of UV lamps 22.

The fibrous substrate 4 coated with the surface finishing agent is irradiated with UV rays during passing through the third polymerization unit 120, to initiate photoradical polymerization of the remaining monomers while raising a temperature by a polymerization heat associated with proceeding of the photoradical polymerization. This temperature rise initiates thermal polymerization by the action of a thermally decomposing radical initiator, resulting in substantial elimination of residual monomers. Furthermore, the surface finishing agent is reacted and a crosslinking density of the surface of the water-absorbing resin particles is improved.

In the lower part of the third polymerization unit 120, there is a heat-retention unit 130. During the fibrous substrate 4 with water-absorbing resin particles passes through the unit, the water-absorbing resin particles are dried to provide a water-absorbing composite 24.

An inner temperature of the heat-retention unit 130 is preferably 70 to 120 °C.

The water-absorbing composite 24 thus prepared is then thermally compressed by a thermal compression roller 26.

The thermally compressed water-absorbing composite 27 is subsequently wound up to provide a water-absorbing composite roll 28.

Third aspect of the invention

In order to further improve water-absorbing ability (a water-absorbing rate, a water absorption, liquid diffusivity and liquid backflow prevention, etc.) of a water-absorbing composite prepared by steps (A) and (B) in the above first aspect of this invention, the water-absorbing composite can be processed by step (D) described below to produce a laminated water-absorbing composite.

Step (D)

In step (D), the water-absorbing composite prepared in steps (A) and (B) and a separately prepared fibrous substrate are laminated to provide a laminate, which is then thermally compressed using rollers to form a laminated water-absorbing composite.

Examples of the fibrous substrate used in step (D) include a paper, a fibrous pad, a carded web, a woven fabric such as a cotton gauze, a knit and an unwoven fabric. Preferable examples of a fiber constituting the fibrous substrate include hydrophilic fibers such as a wood pulp, a rayon, a cotton and a regenerated cellulose with good water-absorbing properties and hydrophilized synthetic fibers.

Specific examples of a particularly preferable fibrous substrate include a toilet paper, a paper towel, a paper napkin, a tissue paper and a wadding(there are collectively referred to as a "sanitary paper").

A thickness of the fibrous substrate is preferably 0.05 to 5 mm, more preferably 0.1 to 1 mm.

A thickness of the fibrous substrate as used herein means one tenth of a thickness of 10 sheets of the fibrous substrate under a load of 0.36 g/cm$^2$.

An area weight of the fibrous substrate is preferably 10~100 g/m$^2$.

A specific volume of the fibrous substrate is preferably 1 to 100 ml/g.

As described above, the fibrous substrate and the water-absorbing composite prepared in steps (A) and (B) are first laminated to give a laminate in step (D).

Then, the laminate is fed between at least one pair of rollers to be thermocompressed. Thus, the water-absorbing composite and the fibrous substrate constituting the laminate is thermally fused via a binder fiber contained in the unwoven fabric in the water-absorbing composite to give a laminated water-absorbing composite in which the water-absorbing composite and the substrate sheet are integrated.

A thermocompression temperature is preferably 50 to 150 °C, more preferably 70 to 120 °C. When a thermocompression temperature is lower than 50 °C, thermocompression may be insufficient. When it is higher than 150 °C, a water-absorbing composite itself may be thermally melted, resulting in deteriorated softness of a laminated water-absorbing composite produced.

A pressure for thermocompression is preferably 0.01 to 100 MPa, more preferably 0.1 to 10 MPa. A time for thermocompression is preferably 1 to 100 sec, depending on a thermocompression temperature and a thermocompression pressure.

Thermocompression is preferably conducted using, for example, a hot roller or embossed roller. Specifically, while pressing a pair of rollers to a linear load of 1 to 100 kg/cm, the laminate of the above water-absorbing composite and the fibrous substrate is continuously fed between the rollers to be thermally compressed between them.

A gap between a pair of rollers used for thermocompression is preferably 10 to 500 μm, depending on a thickness of a laminate to be thermally compressed. If it is less than 10 μm, the water-absorbing composite and/or the fibrous substrate may be cut, while if it is more than 500 μm, thermocompression is insufficiently effective.

In the pair of rollers, at least one roller preferably has an uneven pattern. A preferable uneven pattern formed in the laminated water-absorbing composite prepared by thermocompression using the rollers is the same as formed in thermocompression in step (C) in the second aspect of the present invention.

By the thermocompression, preferably thermocompression forming an uneven pattern, the water-absorbing composite and the fibrous substrate can be adhesively combined and water-absorbing ability (a water-absorbing rate, a water absorption, liquid diffusivity and liquid backflow prevention) can be further improved.

A laminated water-absorbing composite may comprise a fibrous substrate in only one side or both sides.

EXAMPLES

The present invention will be more specifically described with reference to Examples. In these examples, a tensile strength of an unwoven fabric used is determined under the conditions; a width of a test piece: 25 mm, its length: 150 mm, a distance between two clamps: 100 mm and an extension rate: 100 mm/min, in accordance with JIS P8113.

First aspect

Example 1

To an aqueous monomer solution consisting of 70 mol% of sodium acrylate and 30 mol% of acrylic acid (the total content of the monomers: 42 wt%) was added 0.05 wt% (by monomer weight) of tetraethyleneglycol diacrylate (Toagosei Co., Ltd., Aronics M-240) as a crosslinking agent, and the resulting aqueous monomer solution was cooled to 20 °C. Then, nitrogen gas was bubbled into the aqueous monomer solution to reduce a dissolved oxygen concentration in the aqueous monomer solution to 1 ppm or less.

To the aqueous monomer solution were added 0.02 wt% (by monomer weight) of 1-hydroxycyclohexyl-phenyl-ketone as a photoinitiator and 0.15 wt% (by monomer weight) of sodium persulfate as a thermal polymerization initiator.

On the other hand, an air-through unwoven fabric 1 (bulk density: 30 $cm^3/g$, an area weight: 25$g/m^2$) made of PE/PP was heated in an oven at 110 °C for 3 min to form an unwoven fabric 2 (bulk density: 100 $cm^3/g$, tensile strength: 1700 g/25 mm).

Using a spray nozzle, the unwoven fabric 2 was coated with the aqueous monomer solution prepared above to 476 $g/m^2$. The unwoven fabric 2 sprayed with the aqueous monomer solution was irradiated with UV rays using a high-pressure mercury lamp. A UV dose was 2500 mj/$cm^2$.

The resulting water-absorbing composite was soft and the water-absorbing resin particles adhered to 200$g/m^2$.

Comparative Example 1

A water-absorbing composite was prepared as described in Example 1, except an unwoven fabric 1 was not raised. The resulting water-absorbing composite was rigid and water-absorbing resin particles adhered to 200 $g/m^2$.

FIG. 2 (A) shows an electron micrograph of the water-absorbing composite prepared in Example 1. It can be found that fine water-absorbing resin particles adhere to a fiber in a so-called row of beads, where particles are mutually independent.

FIG. 2 (B) shows an electron micrograph of the water-absorbing composite prepared in Comparative Example 1. In the figure, it can be found that the water-absorbing resin particles are not independent spheres but continuos large platy particles consisting of a plurality of particles mutually fused.

Example 2

A water-absorbing composite was prepared as described in Example 1, substituting an unwoven fabric 3 (bulk density: 140 $cm^3/g$, tensile strength: 155 g/25 mm) prepared by raising an unwoven fabric (bulk density: 90 $cm^3/g$, an area weight: 25 $g/m^2$) made of a polyethylene terephthalate (PET) cotton in an oven at 110 °C for 10 sec for an air-through unwoven fabric 1 made of PE/PP used in Example 1. The resulting water-absorbing composite was soft, to which the water-absorbing resin adhered to 200 $g/m^2$.

Example 3

A water-absorbing composite was prepared as described in Example 2, except that a raised unwoven fabric made of a PET cotton with a tensile strength of 265 g/25 mm was used. The resulting water-absorbing composite was soft, to which the water-absorbing resin adhered to 200 $g/m^2$.

Comparative Example 2

A water-absorbing composite was prepared as described in Comparative Example 1, except that an unwoven fabric made of a PET cotton with a tensile strength of 155 g/25 mm was used. The resulting water-absorbing composite was soft to some extent, to which the water-absorbing resin adhered to 200 $g/m^2$.

The water-absorbing composites from Examples 1, 2 and 3 and Comparative Examples 1 and 2 were evaluated in accordance with the test procedure described below. The results are shown in Table 1. An artificial urine used in the test had the following composition.

Artificial urine (per 10 kg)

$$Urea/NaCl/MgSO_4 \cdot 7H_2O/CaCl_2 \cdot 2H_2O/pure\ water$$

$$= 200g/80g/8.0g/3.0g/9709g$$

Artificial urine water absorption

In 300 ml beaker were placed a water-absorbing composite cut in a size of 6 cm $\times$ 7 cm and 200 mL of the artificial urine and the mixture was allowed to stand at room temperature for 30 min. Then, the swollen water-absorbing composite by absorbing the artificial urine was removed from the artificial urine, the attached artificial urine was removed using a 200 mesh filter fabric and a weight of the sample was determined.

An artificial urine water absorption A(kg/m$^2$) was calculated according to the following equation:

$$A=(W1-W2)/0.42$$

wherein W1 represents a weight of the water-absorbing composite after water absorption and W2 represents a weight of the water-absorbing composite before water absorption.

Artificial urine water-absorbing rate

In 300 ml beaker were placed a water-absorbing composite cut in a size of 6 cm $\times$ 7 cm and 200 mL of the artificial urine and the mixture was allowed to stand at room temperature for 5 min to swell the water-absorbing resin particles with the artificial urine. After removing the attached artificial urine with a 200 mesh filter fabric, a weight of the composite was determined. An artificial urine water-absorbing rate B (kg/m$^2$) was calculated according to the following equation:

$$B = (W1-W2)/0.42$$

wherein W1 represents a weight of the water-absorbing composite after water absorption and W2 represents a weight of the water-absorbing composite before water absorption. From the results in Table 1, it is obvious that a raising process and the use of an unwoven fabric with a weak tensile strength are effective. Specifically, the difference in effects between Example 1 and the corresponding Comparative Example 1 is due to the presence of raising, and the difference in effects between Example 1 and Examples 2,3 which are examples of the use of an unwoven fabric with a weak tensile strength reflects a difference in a tensile strength between the unwoven fabrics.

Table 1

| | Artificial urine absorption (kg/m$^2$) | Artificial urine absorption rate (kg/m$^2$) | Softness (feeling) |
|---|---|---|---|
| Example 1 | 6.5 | 5.1 | Good |
| Example 2 | 10.9 | 7.7 | Good |
| Example 3 | 10.2 | 7.1 | Good |
| Comp. Ex. 1 | 4.5 | 3.3 | Passed |
| Comp. Ex. 2 | 8.3 | 4.2 | Not passed |

Table 2 shows sizes of water-absorbing composites swollen by immersion in the artificial urine for 30 min in Examples 1 and 2. The results indicate that the size of the water-absorbing composite in Example 2 was significantly changed. From Table 2, it is indicated that a water-absorbing composite obtained from an unwoven fabric with a weak tensile strength is significantly expanded by water absorption.

Table 2

| | Before swelling (cm $\times$ cm) | After swelling (cm $\times$ cm) |
|---|---|---|
| Example 1 | 6 $\times$ 7 | 6.5 $\times$ 7.5 |
| Example 2 | 6 $\times$ 7 | 6.5 $\times$ 11.5 |

Second aspect of the invention

Example 4

The water-absorbing resin composite prepared in Example 1 was pressed with an iron (pressure: 0.05 MPa) at 110 °C for 10 sec to give a water-absorbing composite.

Example 5

The water-absorbing resin composite prepared in Example 1 was thermocompressed by passing it between a pair of rollers to prepare a water-absorbing composite, where only one of the pair of rollers had a stripe pattern (width: 0.5 mm, interval: 3 mm, depth: 0.4 mm), a roller surface temperature was 80 °C, a roller linear load was 20 kg/cm and a gap between the rollers was 10 $\mu$m.

The water-absorbing composites from Examples 4 and 5 were evaluated by the above test procedure. The results are shown in Table 3.

Artificial urine permeation rate

On a water-absorbing composite was gently dropped a drop of the artificial urine using a dropper. A time from dropping to completion of absorption of the dropped artificial urine into the water-absorbing composite such that it becomes absent on the surface was determined. The time was defined as an artificial urine permeation rate. Comparison between Example 1 and Examples 4,5 which are water-absorbing composites prepared by thermocompression in Table 3 indicate that an artificial urine permeation rate can be significantly improved by thermocompression.

Table 3

|  | Artificial urine absorption (kg/m$^2$) | Artificial urine absorption rate (kg/m$^2$) | Artificial urine permeation rate (sec) |
|---|---|---|---|
| Example 1 | 6.5 | 5.1 | 43.4 |
| Example 4 | 6.6 | 5.9 | 2.3 |
| Example 5 | 6.7 | 6.1 | 1.8 |

Third aspect of the invention

Example 6

The water-absorbing composite prepared in Example 2 together with a toilet paper (an area weight: 20 g/m$^2$) was fed to hot rollers (a roller surface temperature: 80 °C, a nip pressure: 70 kg/cm) to be thermocompressed. The rollers had an uneven pattern with a diamond design (a side length: 2 mm), so that a heat-embossed laminated water-absorbing composite was obtained.

Example 7

The water-absorbing composite prepared in Example 2 was sandwiched between an air-through unwoven fabric (thickness: 0.9 mm, an area weight: 35 g/m$^2$) made of a hydrophilized PE/PET and a toilet paper (an area weight: 20 g/m$^2$). The sandwiched product was fed to hot rollers for thermally embossing as described in Example 6 to provide a laminated water-absorbing composite.

Using the laminated water-absorbing composite, the above evaluation tests were conducted. The results are shown in Table 4.

Table 4

|  | Artificial urine absorption (kg/m$^2$) | Artificial urine absorption rate (kg/m$^2$) |
|---|---|---|
| Example 6 | 11.7 | 8.0 |
| Example 7 | 12.3 | 8.3 |

Evaluation of incontinence liners

Preparation process for an incontinence liner for evaluation

Each of the laminated water-absorbing composites in Examples 6 and 7 and the water-absorbing composites in Example 2 as Reference Example 1 were cut into 4.5 cm × 14 cm. Next, it was sandwiched between an unwoven fabric and a polyethylene sheet and the periphery of the product was fixed by a stapler to prepare a sample for paper diaper (incontinence liner) evaluation.

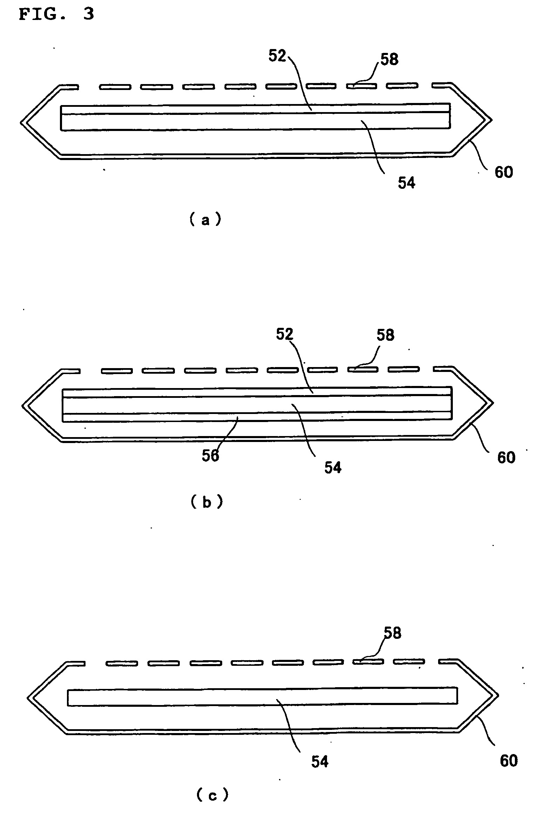

FIG. 3 shows a configuration of the incontinence liner prepared. FIGs. 3(A) to 3(C) show incontinence liners prepared using the laminated water-absorbing composite in Example 6, using the water-absorbing composite in Example 7, and using the water-absorbing composite in Example 1 (Reference Example 1). In FIG. 1, 52 denotes an unwoven fabric; 54 denotes a water-absorbing composite; 56 denotes a toilet paper; 58 is an unwoven fabric; 60 is a polyethylene sheet.

Evaluation procedure for an incontinence liner

An incontinence liner was placed on a level surface such that an unwoven fabric 58 is the upper side. On the center of the unwoven fabric 58 is placed a cylinder ($\phi$: 26 mm), into which was poured 5 mL of the artificial urine (blue-colored) in one time. A time taken for completion of absorption of the artificial urine in the cylinder into the incontinence liner was determined and was defined as a first absorption time. After leaving it for 3 min, the cylinder was again placed on the center of the incontinence liner. After pouring 5 mL of the artificial urine as described above, a second absorption time was determined. After leaving it for 2 min, on the center of the incontinence liner was placed 10 sheets of kitchen paper cut into 4 cm × 5 cm whose weight had been measured (W1 g). Then, on the kitchen paper was further placed a 100 g weight (4 cm × 5 cm), and it was pressed for 10 sec. After removing the kitchen paper, its weight was determined (W2 g). A backflow was determined by the following equation:

$$\text{Backflow} = \text{W2·W1}.$$

After determining a backflow, the incontinence liner was opened up. A maximum width of the diffusion area in the artificial urine was measured with a ruler and was defined as a diffusion distance. The results are shown in FIG. 5. By comparison Examples 6 and 7 which are examples of the use of a laminated water-absorbing composite and Reference Example 1 which is an example of the use of the water-absorbing composite in Example 2 in Table 5, it is indicated that lamination significantly improved various water-absorbing ability parameters.

Table 5

| Incontinence liner | Absorption time (sec) | | Diffusion distance (cm) | Backflow (g) |
|---|---|---|---|---|
| | First | Second | | |
| Example 6 | 2 | 7 | 10.7 | 0.02 |
| Example 7 | 1 | 6 | 11.0 | 0.01 |
| Ref. Exam. 1 | 2 | 33 | 6.0 | 0.66 |

**Claims**

1. A process for manufacturing a water-absorbing composite comprising the steps of:

   **(A0) raising a fibrous substrate by heating at a temperature of 70-150°C;**

   (A) spraying an aqueous monomer solution containing acrylic acid and/or its salt on a the heat-raised fibrous substrate to apply droplets of the aqueous monomer solution on the fiber constituting the fibrous substrate;
   (B) polymerizing the monomers in the droplets to form a water-absorbing composite in which the water-absorbing resin particles adhere to the fiber constituting the fibrous substrate,
   wherein the fibrous substrate is a unwoven fabric whose base fiber has a fineness of 2.0 to 20 dtex and a fiber length of 32 to 128 mm.

2.  A process for manufacturing a water-absorbing composite according to claim 1 comprising the further step of:

    (C) thermo-compressing the water-absorbing composite prepared in step (B).

3.  The process for manufacturing a water-absorbing composite as claimed in Claim 1 or 2, wherein the amount of the water-absorbing resin particles adhering to the fibrous substrate is 100 g/m$^2$ or more.

4.  The process for manufacturing a water-absorbing composite as claimed in Claim 1 or 2, wherein the amount of the water-absorbing resin particles adhering to the fibrous substrate is 250 to 500 g/m$^2$ or more.

5.  The process for manufacturing a water-absorbing composite as claimed in Claim 1 or 2, wherein the aqueous monomer solution contains a crosslinking agent in 1000 to 5000 ppm to the amount of the monomers.

6.  The process for manufacturing a water-absorbing composite as claimed in Claim 1 or 2, wherein the fibrous substrate to be sprayed with the aqueous monomer solution is an unwoven fabric with a tensile strength of 50 to 300 g/25 mm.

7.  A process for manufacturing a laminated water-absorbing composite comprising the steps of:

    **(A0) raising a fibrous substrate by heating at a temperature of 70-150°C;**

    (A) spraying an aqueous monomer solution containing acrylic acid and/or its salt on the heat-raised fibrous substrate to apply droplets of the aqueous monomer solution on the fiber constituting the fibrous substrate;
    (B) polymerizing the monomers in the droplets to form a water-absorbing composite in which the water-absorbing resin particles adhere to the fiber constituting the fibrous substrate; and
    (D) laminating the water-absorbing composite prepared in step (B) and a fibrous substrate to form a laminate and then passing the laminate between a pair of rollers, at least one of which is heated, for thermally compressing the laminate to integrate combine the water-absorbing composite and the fibrous substrate by thermal fusion;
    wherein the fibrous substrate is a unwoven fabric whose base fiber has a fineness of 2.0 to 20 dtex and a fiber length of 32 to 128 mm.

8.  The process for manufacturing a laminated water-absorbing composite as claimed in Claim 7, wherein at least one of the pair of rollers has a surface with an uneven pattern.

**Patentansprüche**

1.  Verfahren zur Herstellung eines wasserabsorbierenden Verbundmaterials, umfassend die Schritte:

    (A0) Aufrichten eines faserigen Substrates durch Erwärmen auf eine Temperatur von 70 - 150°C;
    (A) Aufsprühen einer wässrigen Monomerenlösung, die Acrylsäure und/oder deren Salz enthält, auf das wärmeaufgerichtete faserige Substrat, um Tröpfchen der wässrigen Monomerenlösung auf die Faser aufzubringen, die das faserige Substrat bildet;
    (B) Polymerisieren der Monomere in den Tröpfchen, um ein wasserabsorbierendes Verbundmaterial zu bilden, in dem die wasserabsorbierenden Harzteilchen an der Faser haften, die das faserige Substrat bildet;
    wobei das faserige Substrat ein Faservlies ist, dessen Grundfaser eine Feinheit von 2,0 bis 20 dtex und eine Faserlänge von 32 bis 128 mm aufweist.

2.  Verfahren zur Herstellung eines wasserabsorbierenden Verbundmaterials nach Anspruch 1, des Weiteren umfassend den Schritt:

    (C) thermisches Verdichten des in Schritt (B) hergestellten wasserabsorbierenden Verbundmaterials.

3.  Verfahren zur Herstellung eines wasserabsorbierenden Verbundmaterials nach Anspruch 1 oder 2, wobei die Menge der am faserigen Substrat haftenden wasserabsorbierenden Harzteilchen 100 g/m$^2$ oder mehr beträgt.

**4.** Verfahren zur Herstellung eines wasserabsorbierenden Verbundmaterials nach Anspruch 1 oder 2, wobei die Menge der am faserigen Substrat haftenden wasserabsorbierenden Harzteilchen 250 bis 500 g/m$^2$ oder mehr beträgt.

**5.** Verfahren zur Herstellung eines wasserabsorbierenden Verbundmaterials nach Anspruch 1 oder 2, wobei die wässrige Monomerenlösung ein Vernetzungsmittel mit 1000 bis 5000 ppm zusätzlich zur Menge der Monomeren enthält.

**6.** Verfahren zur Herstellung eines wasserabsorbierenden Verbundmaterials nach Anspruch 1 oder 2, wobei das mit der wässrigen Monomerenlösung zu besprühende faserige Substrat ein Faservlies mit einer Zugfestigkeit von 50 bis 300 g/25 mm ist.

**7.** Verfahren zur Herstellung eines laminierten wasserabsorbierenden Verbundmaterials, umfassend die Schritte:

(A0) Aufrichten eines faserigen Substrates durch Erwärmen auf eine Temperatur von 70 - 150°C;
(A) Aufsprühen einer wässrigen Monomerenlösung, die Acrylsäure und/oder deren Salz enthält, auf ein wärmeaufgerautes faseriges Substrat, um Tröpfchen der wässrigen Monomerenlösung auf die Faser aufzubringen, die das faserige Substrat bildet;
(B) Polymerisieren der Monomere in den Tröpfchen, um ein wasserabsorbierendes Verbundmaterial zu bilden, in dem die wasserabsorbierenden Harzteilchen an der Faser haften, die das faserige Substrat bildet; und
(D) Laminieren des in Schritt (B) hergestellten wasserabsorbierenden Verbundmaterials und eines faseriges Substrats, um ein Laminat zu bilden, und anschließendes Durchführen des Laminats zwischen einem Paar Walzen, von denen wenigstens eine beheizt ist, zur thermischen Verdichtung, um das wasserabsorbierende Verbundmaterial und das faserige Substrat durch thermische Verschmelzung miteinander zu vereinigen, wobei das faserige Substrat ein Faservlies ist, dessen Grundfaser eine Feinheit von 2,0 bis 20 dtex und eine Faserlänge von 32 bis 128 mm aufweist.

**8.** Verfahren zur Herstellung eines laminierten wasserabsorbierenden Verbundmaterials nach Anspruch 7, wobei wenigstens eine Walze des Walzenpaars eine Oberfläche mit ungleichmäßigem Muster aufweist.

**Revendications**

**1.** Procédé de fabrication d'un composite absorbant l'eau comprenant les étapes consistant à :

(A0) Cultivation d'un substrat fibreux par chauffage à une température de 70-150°C;
(A) pulvériser une solution aqueuse de monomère contenant de l'acide acrylique et/ou son sel sur un substrat fibreux rendu rugueux par chauffage pour appliquer des gouttelettes de la solution aqueuse de monomère sur la fibre constituant le substrat fibreux,
(B) polymériser les monomères dans les gouttelettes pour former un composite absorbant l'eau dans lequel les particules de résine absorbant l'eau adhèrent à la fibre constituant le substrat fibreux,
dans lequel le substrat est un matériau non tissé dont la fibre de base a une finesse de 2,0 à 20 dtex et une longueur de fibre de 32 à 128 mm.

**2.** Procédé de fabrication d'un composite absorbant l'eau selon la revendication 1, comprenant en plus l'étape consistant à :

(C) thermocomprimer le composite absorbant l'eau préparé à l'étape (B).

**3.** Procédé de fabrication d'un composite absorbant l'eau selon la revendication 1 ou 2, dans lequel la quantité de particules de résine absorbant l'eau adhérant au substrat fibreux est de 100 g/m$^2$ ou plus.

**4.** Procédé de fabrication d'un composite absorbant l'eau selon la revendication 1 ou 2, dans lequel la quantité de particules de résine absorbant l'eau adhérant au substrat fibreux est de 250 à 500 g/m$^2$ ou plus.

**5.** Procédé de fabrication d'un composite absorbant l'eau selon la revendication 1 ou 2, dans lequel la solution aqueuse de monomère contient un agent réticulant dans une proportion de 1000 à 5000 ppm rapportée à la quantité de monomères.

**6.** Procédé de fabrication d'un composite absorbant l'eau selon la revendication 1 ou 2, dans lequel le substrat fibreux à pulvériser avec la solution aqueuse de monomère est un tissu non-tissé ayant une résistance à la traction de 50 à 300 g/25 mm.

7.  Procédé de fabrication d'un composite absorbant l'eau stratifié comprenant les étapes consistant à :

(A0) Cultivation d'un substrat fibreux par chauffage à une température de 70-150°C;
(A) pulvériser une solution aqueuse de monomère contenant de l'acide acrylique et/ou son sel sur un substrat fibreux rendu rugueux par chauffage pour appliquer des gouttelettes de la solution aqueuse de monomère sur la fibre constituant le substrat fibreux,
(B) polymériser les monomères dans les gouttelettes pour former un composite absorbant l'eau dans lequel les particules de résine absorbant l'eau adhèrent à la fibre constituant le substrat fibreux, et
(D) stratifier le composite absorbant l'eau préparé à l'étape (B) et un substrat fibreux pour former un stratifié et passer ensuite le stratifié entre deux rouleaux, dont au moins l'un est chauffé, pour comprimer thermiquement le stratifié afin de fusionner le composite absorbant l'eau et le substrat fibreux par fusion thermique,
dans lequel le substrat est un matériau non tissé dont la fibre de base a une finesse de 2,0 à 20 dtex et une longueur de fibre de 32 à 128 mm.

8.  Procédé de fabrication d'un composite absorbant l'eau stratifié selon la revendication 7, dans lequel au moins l'un des deux rouleaux a une surface ayant un motif irrégulier.

FIG. 1

FIG. 2

(A)

010600 SEI    15.0kV    x50    100μm WD39mm

(B)

010606 SEI    15.0kV    x50    100μm WD41mm

FIG. 3

(a)

(b)

(c)

**EP 1 548 179 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 1292103 A
- JP 2000328456 A
- JP 9067403 A
- JP 2554136 A